Europäisches Patentamt

European Patent Office

Office européen des brevets

(19)

(11) **EP 1 122 130 B1**

(12) **EUROPÄISCHE PATENTSCHRIFT**

(45) Veröffentlichungstag und Bekanntmachung des Hinweises auf die Patenterteilung:
**31.03.2004   Patentblatt 2004/14**

(51) Int Cl.⁷: **B60R 13/10**, B44B 5/00, G09F 7/00

(21) Anmeldenummer: **01100035.3**

(22) Anmeldetag: **05.01.2001**

(54) **Verfahren und Vorrichtung zur Herstellung von Platinen für Kraftfahrzeug-Nummernschilder**

Method and device for producting number plates for motor vehicle identification

Procédé et dispositif pour la production des platines pour plaques d'immatriculation de véhicules automobiles

(84) Benannte Vertragsstaaten:
**AT BE CH CY DK ES FI FR GB GR IE IT LI LU MC NL PT SE TR**

(30) Priorität: **03.02.2000  DE 10004593**

(43) Veröffentlichungstag der Anmeldung:
**08.08.2001   Patentblatt 2001/32**

(73) Patentinhaber: **ALCAN DEUTSCHLAND GMBH
D-37075 Göttingen (DE)**

(72) Erfinder:
 • **Bode, Werner
   37133 Friedland (DE)**
 • **Beuchel, Edwin
   37016 Nörten-Hardenberg (DE)**

 • **Richarz, Georg
   37120 Bovenden (DE)**
 • **Wildner, Hans-Joachim
   37431 Bad Lauterberg (DE)**

(74) Vertreter: **HOFFMANN - EITLE
Patent- und Rechtsanwälte
Arabellastrasse 4
81925 München (DE)**

(56) Entgegenhaltungen:
 **EP-A- 0 437 720          DE-A- 3 203 801
 DE-A- 3 741 232          DE-A- 4 219 869
 DE-A- 19 816 605         DE-C- 19 602 153
 US-A- 4 612 074**

**Beschreibung**

Technisches Gebiet

Die Erfindung betrifft ein Verfahren sowie eine Vorrichtung zur Herstellung von Platinen für Kraftfahrzeug-Nummernschilder nach dem Oberbegriff des Anspruchs 1 bzw. 4.

Platinen für Kraftfahrzeug-Nummernschilder, die zur Erstellung des endgültigen Nummernschildes mit dem individuellen Aufdruck bedruckt und geprägt werden, werden im wesentlichen wie folgt hergestellt. Auf ein Blechband wird eine Folie mit bestimmten vorgegebenen graphischen Elementen, beispielsweise dem umlaufenden Rand oder dem Bereich mit dem Europa-Emblem und einem Länderbuchstaben aufkaschiert, und von dem Blechband werden nachfolgend die einzelnen Platinen abgetrennt.

Stand der Technik

Ein Verfahren und eine Vorrichtung nach dem Oberbegriff des Anspruchs 1 bzw. 4 sind aus der DE 198 16 605 A1 bekannt. Hierbei wird, um auf dem Blechband den Soll-Abstand zwischen den sich wiederholenden graphischen Elementen sicherzustellen, die bedruckte Folie vor und/oder während des Aufkaschierens kontrolliert gedehnt. Hierdurch weisen die sich wiederholenden graphischen Elemente nach dem Aufkaschieren einen vorgegebenen Abstand auf, der einen konstanten, vorgegebenen Verschnitt enthält. Nachteilig bei diesem Verfahren ist folglich, dass der Verschnitt nicht vermieden werden kann, und somit beim Trennen des Metallbandes in die einzelnen Platinen Verschnitt oder Schrott auftritt.

Dieser Nachteil gilt in gleicher Weise für das Verfahren gemäß der DE 42 19 869 C2, bei dem eine Überlänge vorgesehen wird, die der Aufnahme unvermeidlicher Toleranzen dient und am Ende des Herstellungsvorganges abgetrennt werden muss.

Bei dem Verfahren, das in der DE 32 03 801 C2 beschrieben ist, wird die Kunststofffolie ohne eine beschriebene Steuerung auf das Blechband aufkaschiert. Dieses Verfahren ermöglicht nicht mit der erforderlichen Genauigkeit die Einhaltung von Toleranzen sowohl zwischen den einzelnen Aufdrucken als auch hinsichtlich der Länge der hergestellten Platinen.

Darstellung der Erfindung

Der Erfindung liegt die Aufgabe zugrunde, ein Verfahren und eine Vorrichtung zur Herstellung von Platinen für Kraftfahrzeug-Nummernschilder zu schaffen, die es ermöglichen, mit einer vergleichsweise einfachen Steuerung und einer einfach aufgebauten Herstellungsvorrichtung die Herstellung von Platinen zu erreichen, ohne dass zwischen einzelnen Platinen Verschnitt anfällt.

Die Lösung dieser Aufgabe erfolgt zum einen durch das im Patentanspruch 1 beschriebene Verfahren.

Demzufolge wird erfindungsgemäß sowohl das Blechband als auch die bedruckte Folie zugeführt. Hierbei ist die bedruckte Folie auf Untermaß mit den sich wiederholenden graphischen Elementen versehen. Mit anderen Worten liegt der Ist-Abstand der graphischen Elemente auf der zugeführten Folie unterhalb des Soll-Abstandes. Der erforderliche Soll-Abstand wird einschließlich der unvermeidlichen Toleranzen dadurch hergestellt, dass die Folie vor oder während des Aufkaschierens derart gedehnt wird, dass der erforderliche Abstand eingestellt wird, und die Folie mit einem Abstand, der mit Ausnahme von Toleranzen dem Soll-Abstand entspricht, auf das Blechband kaschiert wird.

Die unvermeidlichen Toleranzen werden erfindungsgemäß dadurch ausgeglichen, dass der Ist-Abstand zwischen den sich wiederholenden graphischen Elementen nach dem Aufkaschieren erfasst wird, und eine Trenneinrichtung, die dem Abtrennen einzelner Platinen von dem Band dient, sowie der zugeordnete Vorschub derart gesteuert werden, dass die Toleranzen ausgeglichen werden. Hierbei wird für die Länge der einzelnen Platinen auch diejenige Toleranz in Betracht gezogen, die für die Länge zu beachten ist. In jedem Fall können hierbei gewissermaßen unmittelbar aneinander angrenzend die einzelnen Platinen von dem Blechband abgetrennt werden, und zwischen einzelnen Platinen tritt kein Verschnitt auf, der nicht nutzbar ist und deshalb Schrott darstellt.

Damit der Ausgleich der Toleranzen bei gleichzeitiger Einhaltung der Soll-Länge der einzelnen Platine einschließlich zulässiger Toleranz stets möglich ist, wird der Ist-Abstand zwischen den graphischen Elementen nach dem Aufkaschieren erfasst, und das Ergebnis dieser Erfassung wird auch für die Steuerung der Dehnung der bedruckten Kunststofffolie vor dem Aufkaschieren verwendet. Der Grund dafür liegt darin, dass andernfalls beispielsweise bei einem ständigen Überschreiten des Ist-Abstandes zwischen den graphischen Elementen die vorgegebene maximale Länge der Platine nicht mehr eingehalten werden kann. Aus diesem Grund wird der sich nach dem Aufkaschieren ergebende Ist-Abstand zwischen den graphischen Elementen zu der Steuerung für die Dehnung der noch nicht aufkaschierten Kunststofffolie zurückgeführt, und deren Dehnung in geeigneter Weise angepasst. Folglich ist stets eine Herstellung einzelner Platinen für Kraftfahrzeug-Nummernschilder derart möglich, dass kein Verschnitt entsteht und die Platine den Anforderungen entspricht.

Bevorzugte Weiterbildungen sind in den weiteren Ansprüchen beschrieben.

Obwohl auch andere Vorgehensweisen denkbar sind, wird im Rahmen der Erfindung bevorzugt, dass sowohl das Blechband als auch die bedruckte Folie fortlaufend zugeführt werden, wobei die Folie langsamer zugeführt wird als das Blechband. Hierdurch kann in besonders einfacher Weise die erforderliche Dehnung der Kunststofffolie vor und/oder während des Aufkaschierens realisiert werden. Bei geeignet langsamer Zuführung stellt sich nämlich die Dehnung automatisch ein, sobald ein vorderer Abschnitt der bedruckten Kunststofffolie an dem Blechband haftet.

Für die Vervollständigung des Herstellungsvorganges einer Platine für ein Kraftfahrzeug-Nummernschild, wie sie nachfolgend weiter verarbeitet wird, wird im Rahmen des erfindungsgemäßen Verfahrens bevorzugt, dass in den Herstellungsvorgang integriert ein Stanzen zur Abrundung der Ecken der Platine und ein Prägen des umlaufenden Randes durchgeführt wird.

Die Lösung der oben genannten, der Erfindung zugrundeliegenden Aufgabe erfolgt zum anderen durch eine Vorrichtung gemäß Patentanspruch 4.

Demzufolge weist die erfindungsgemäße Vorrichtung eine Zuführvorrichtung für bedruckte Folie und eine Zuführvorrichtung für Blechband auf. Ferner ist eine Abtasteinrichtung zur Erfassung des Abstandes zwischen bestimmten, sich wiederholenden graphischen Elementen vorgesehen, und unter anderem anhand dieser Information wird eine der Zuführvorrichtung für die Folie zugeordnete Verzögerungsvorrichtung in geeigneter Weise gesteuert. Diese Steuerung erfolgt derart, dass die bedruckte Folie gedehnt wird und in eine Kaschiereinrichtung, in der die Folie auf das Blechband aufkaschiert wird, mit einem Abstand zwischen den graphischen Elementen einläuft, der dem Soll-Abstand ± einer Toleranz entspricht. In an sich bekannter Weise sind zusätzlich eine Trenneinrichtung und eine Steuerung vorgesehen.

Erfindungsgemäß ist eine dritte Abtasteinrichtung vor der Trenneinrichtung vorhanden, die den Abstand der sich wiederholenden graphischen Elemente in dem Zustand erfasst, dass die Folie bereits auf das Blechband aufkaschiert ist. Diese Erfassung wird zum einen dazu verwendet, einzelne Platinen von dem Band derart abzutrennen, dass die Position des graphischen Elements zum Rand dem Soll-Abstand einschließlich Toleranz, und die Länge der Platine einer Soll-Länge, ebenfalls einschließlich Toleranz, entspricht. Die Erfassung des Abstandes zwischen den graphischen Elementen auf dem aufkaschierten Band wird darüber hinaus dazu verwendet, die Dehnung des bedruckten Folienbandes vor der Kaschierstation so zu steuern, dass eine gegebenenfalls wiederholt auftretende Über- oder Unterlänge des aufkaschierten Bandes vermieden wird. Andernfalls könnten die Toleranzen nämlich nicht mehr zuverlässig ausgeglichen werden, und es bestünde die Gefahr, dass die Maximal- oder Minimallänge der fertigen Platine nicht mehr eingehalten werden kann.

Bevorzugte Weiterbildungen der erfindungsgemäßen Vorrichtung sind in den weiteren Ansprüchen beschrieben.

Demzufolge hat sich als Verzögerungsvorrichtung, durch welche die erforderliche Dehnung des bedruckten Folienbandes bewirkt wird, eine Einrichtung in Form von Bremswalzen als günstig erwiesen.

Um die Vorrichtung zur Herstellung der letztendlich benötigten Platinen zu komplettieren, wird bevorzugt, dass die erfindungsgemäße Herstellungsvorrichtung zusätzlich eine Stanz- und Prägevorrichtung aufweist, mit der die Ecken der Platine mit der erwünschten, gerundeten Form versehen werden können und der umlaufende Rand in geeigneter Weise geprägt werden kann.

## Kurze Beschreibung der Zeichnungen

Nachfolgend wird die Erfindung anhand einer beispielhaft in den Zeichnungen dargestellten Ausführungsform näher erläutert. Es zeigen:

Fig. 1    eine schematische Seitenansicht der erfindungsgemäßen Herstellungsvorrichtung; und

Fig. 2    eine schematische Draufsicht auf einen Abschnitt des mit der bedruckten Kunststofffolie versehenen Blechbandes.

## Ausführliche Beschreibung der bevorzugten Ausführungsform der Erfindung

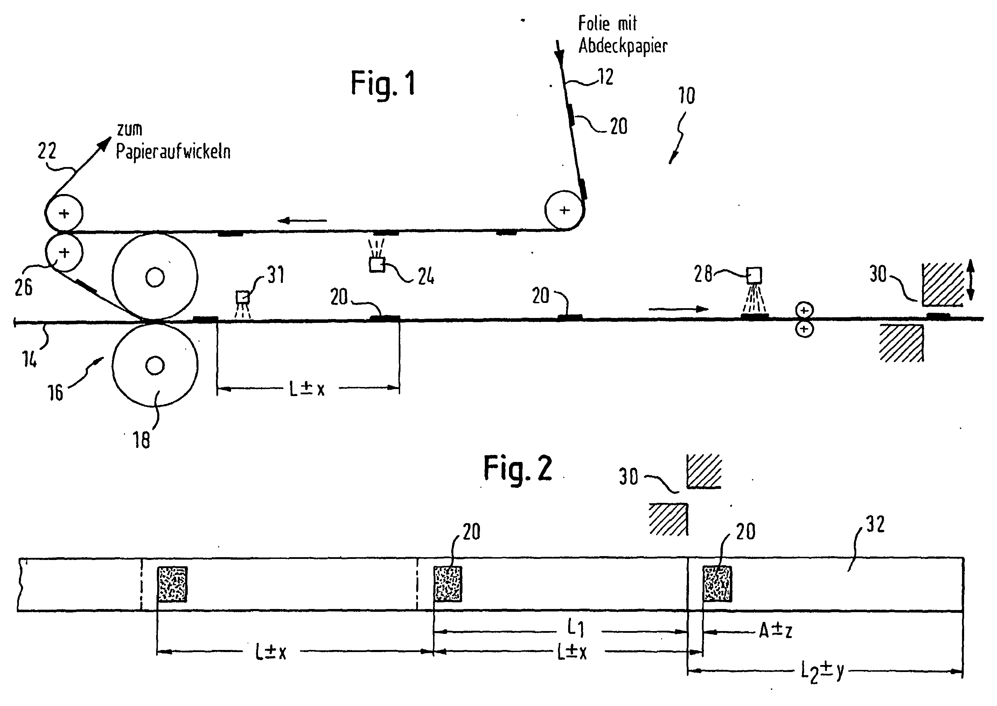

Wie in Fig. 1 dargestellt ist, wird in der erfindungsgemäßen Vorrichtung 10 zur Herstellung von Platinen für Kraftfahrzeug-Nummernschilder einerseits eine bedruckte Kunststofffolie 12 und andererseits ein Blechband 14, das bevorzugt aus Aluminium besteht und von einem (nicht gezeigten) Coil abgewickelt wird, zu einer Kaschierstation 16 mit Laminierwalzen 18 zugeführt. Hierbei ist die Kunststofffolie 12 mit sich wiederholenden graphischen Elementen versehen, die in der Figur als in regelmäßigen Abständen zueinander angeordnete Embleme 20, beispielsweise in Form des bekannten blauen, am linken Rand des Nummernschildes vorgesehenen Euro-Emblems, angedeutet sind. Ferner ist die Kunststofffolie auf einem Trägerband 22 angebracht, von dem es vor der Bremswalze 26 gelöst wird. Wie durch den Pfeil angedeutet ist, wird das Trägermaterial 22 in einer anderen Richtung von der Kaschierstation 16 weggeführt.

Erfindungsgemäß ist die Kunststofffolie 12 mit den Emblemen 20 auf Untermaß bedruckt, d.h. die Embleme weisen einen Abstand zueinander auf, der unterhalb des Soll-Abstandes liegt. Um die Embleme vor oder während des Kaschierens in der Kaschierstation 16 auf den richtigen Abstand zueinander zu bringen, wird zum einen durch eine Abtasteinrichtung 24, beispielsweise in Form eines optischen Sensors, der Ist-Abstand zwischen den einzelnen Emblemen vor dem Ablösen des Trägermaterials erfasst.

Mittels einer Steuerung wird eine Verzögerungseinrichtung in Form von Bremswalzen 26 beispielsweise durch Aufbringen einer Kraft derart gesteuert, dass die sich wiederholenden Embleme 20 nach dem Kaschieren einen Abstand L ± eine Toleranz x aufweisen. Diese Dehnung erfolgt im Rahmen der sogenannten Dehnstrecke zwischen der Bremswalze 26 und den Laminierwalzen 18. Damit der zulässige Abstand zwischen den einzelnen Emblemen, und insbesondere die Position des jeweiligen Emblems an der fertigen Platine eingehalten wird, und die Platine mit der korrekten Länge von dem Band bestehend aus dem Blechband 14 mit der aufkaschierten Kunststofffolie 12 abgetrennt wird, wird der Ist-Abstand zwischen den einzelnen Emblemen 20 unmittelbar vor einer Trenneinrichtung 30 durch eine weitere Abtasteinrichtung 28 erfasst. Der hierbei erfasste Abstand zwischen den einzelnen Emblemen 20 wird dazu verwendet, wie erwähnt, eine Platine mit einer korrekten Länge, gegebenenfalls einschließlich zulässiger Toleranz, und mit einem an der richtigen Stelle befindlichen Emblem von dem Band abzutrennen.

Dies ist jedoch in dem Fall, dass der Abstand zwischen den einzelnen Emblemen wiederholt zu gering oder zu groß ist, nicht dauerhaft möglich. Mit anderen Worten würde in diesem Fall eine zulässige Minimal- oder Maximallänge der Platine nicht mehr eingehalten. Aus diesem Grund wird erfindungsgemäß der von der Abtasteinrichtung 31 erfasste Abstand an die Steuerung zurückgemeldet, und die Dehnung der Kunststofffolie 12 wird mittels der Bremswalzen 26 in geeigneter Weise gesteuert, um den Ist-Abstand der Embleme nach dem Aufkaschieren näher an den Soll-Abstand heranzubringen.

Es versteht sich im übrigen, dass als sich wiederholendes graphisches Element anstelle des beispielhaft gezeigten Emblems auch der übliche schwarze, umlaufende Rand verwendet werden kann. Ferner sei erwähnt, dass die Dehnung der Kunststofffolie durch das erfindungsgemäße Verfahren derart gesteuert werden kann, dass die sich für die aufkaschierte Folie ergebenden Abweichungen bei maximal ±0,5 mm und insbesondere bei maximal ±0,3 mm liegen.

In Fig. 2 ist schematisch dargestellt, wie sich die einzelnen auftretenden Toleranzen zueinander verhalten, und wie mittels des erfindungsgemäßen Verfahrens die erforderlichen Soll-Abstände und -Längen eingehalten werden können.. Als einzuhaltende Größe ist zum einen die Länge $L_2$ einschließlich einer Toleranz von ±y einzuhalten. Hierbei handelt es sich um die Länge der einzelnen, von der Trenneinrichtung 30 von dem Band abgetrennten Platine. In Fig. 2 ist die vorderste Platine mit 32 bezeichnet. Zum anderen muss in dem gezeigten Beispielfall ein Emblem 20 vom hinteren Rand der Platine 32 einen bestimmten Abstand A ± einer zulässigen Toleranz z einhalten. Von der Abtasteinrichtung 28, die sich vor der Trenneinrichtung 30 befindet, wird der Ist-Abstand zwischen einzelnen Emblemen 20 einschließlich der vorhandenen Toleranz, insgesamt L ±x, erfasst. Wenn x > 0 ist, wenn die einzelnen Embleme 20 zueinander also einen größeren Abstand als den Soll-Abstand L aufweisen, kann dies dadurch ausgeglichen werden, dass die Länge $L_2$ der Platine vergrößert wird, um den Abstand A zwischen dem Emblem 20 und dem hinteren Rand der Platine innerhalb der zulässigen Toleranz zu halten. Damit jedoch hierbei die Länge der Platine nicht außerhalb des zulässigen Bereichs $L_2$ ±y gerät, wird der Ist-Abstand L ±x zwischen den Emblemen 20 von der Abtasteinrichtung 31 erfasst und zur Steuerung zurückgeführt, so dass die Geschwindigkeit der Kunststofffolie so eingestellt werden kann, dass sich der Abstand zwischen aufeinanderfolgenden Emblemen 20 wieder verringert und sich an den Soll-Abstand annähert.

Ferner ist zu beachten, dass sich die Länge $L_1$, also der Abstand des Emblems 20 von der Vorderkante der Platine, ergibt aus

$$L_1 = (L \pm x) - (A \pm z).$$

Wenn hierbei mehrmals in Folge x minimal und z maximal ist, so wird der Wert $L_1$, der Abstand zwischen dem Emblem 20 und der Trenneinrichtung 30 bezeichnet, minimal. Wenn der beschriebene Fall folglich mehrmals in Folge auftritt, wird der für die Länge der Platine zulässige Bereich verlassen. Durch die erfindungsgemäße Rückführung des Ist-Zustandes zwischen den Emblemen der aufkaschierten Folie kann hier anhand der von der Abtasteinrichtung 31 zur Verfügung gestellten Information auf den Laminator korrigierend eingegriffen werden. Anhand der von der Abtasteinrichtung 28 gelieferten Information wird dann die Platinenlänge in der Trenneinrichtung 30 in Form der gezeigten Schere gesteuert.

**Patentansprüche**

1. Verfahren zur Herstellung von Platinen für Kraftfahrzeug-Nummernschilder mit folgenden Schritten:

   - Zuführen eines Blechbandes (14),

   - Zuführen einer bedruckten Folie (12), die auf Untermaß mit sich wiederholenden graphischen Elementen (20) versehen ist,

   - Erfassen des Abstandes der sich wiederholenden graphischen Elemente (20) vor dem Aufkaschieren,

   - Aufkaschieren oder -laminieren der Folie (12) auf das Blechband (14), wobei die Folie (12) vor oder während des Aufkaschierens derart gedehnt wird, dass der Abstand zwischen bestimmten graphischen Elementen (20) einem vorgegebenen Soll-Abstand ± Toleranz entspricht, und

- Abtrennen der Platinen von dem mit der bedruckten Folie (12) versehenen Blechband (14),

**dadurch gekennzeichnet, dass**
der Ist-Abstand nach dem Aufkaschieren in einer zweiten Abtasteinrichtung (31) erfasst wird, die Abweichung vom Soll-Abstand daraus ermittelt und zur Steuerung der Dehnung verwendet wird, und eine dritte Abtasteinrichtung (28) vor einer Trenneinrichtung (30) vorgesehen ist, deren Information zur Steuerung der der Trenneinrichtung (30) zugeordneten Vorschubeinrichtung verwendet wird, mit welcher die beim Kaschieren entstandenen Toleranzen beim Abtrennen ausgeglichen werden, so dass die Toleranzen der Platinenlänge eingehalten werden.

2. Verfahren nach Anspruch 1,
**dadurch gekennzeichnet, dass**
das Blechband (14) und die Folie (12) fortlaufend zugeführt werden, wobei die Folie (12) langsamer zugeführt wird als das Blechband (14).

3. Verfahren nach Anspruch 1 oder 2,
**dadurch gekennzeichnet, dass**
nach dem Trennen die Ecken der Platine durch Stanzen abgerundet werden und ein umlaufender Rand geprägt wird.

4. Vorrichtung (10) zum Herstellen von Platinen (32) für Kraftfahrzeug-Nummernschilder, mit:

- einer Zuführvorrichtung für bedruckte Folie (12), die auf Untermaß mit sich wiederholenden graphischen Elementen (20) versehen ist;

- einer ersten, im Bereich der Zuführvorrichtung angeordneten Abtasteinrichtung (24) zur Erfassung des Abstandes zwischen den sich wiederholenden graphischen Elementen (20) vor dem Abziehen des Trägermaterials;

- einer der Zuführvorrichtung für die Folie (12) zugeordneten Verzögerungsvorrichtung (26);

- einer Zuführvorrichtung für Blechband (14);

- einer Kaschierstation (16);

- einer Trenneinrichtung (30); und

- einer Steuerung für die Trenneinrichtung;

**dadurch gekennzeichnet, dass**
eine zweite, nach der Kaschierstation (16) angeordnete Abtasteinrichtung (31) und vor der Trenneinrichtung (30) eine dritte Abtasteinrichtung (28) zur Erfassung des Abstandes zwischen den sich wiederholenden graphischen Elementen (20) auf der aufkaschierten Folie vorgesehen ist.

5. Vorrichtung nach Anspruch 4,
**dadurch gekennzeichnet, dass**
die Verzögerungsvorrichtung Bremswalzen (26) aufweist.

6. Vorrichtung nach Anspruch 4 oder 5,
**dadurch gekennzeichnet, dass**
zusätzlich eine Stanz-/Prägevorrichtung vorgesehen ist.

**Claims**

1. Method for producing blanks for motor vehicle number plates having the following steps:

- supplying a sheet-metal strip (14),

- supplying a printed film (12) provided, at a dimension smaller than desired, with repeating graphic elements (20),

- detecting the spacing of the repeating graphic elements (20) before lamination,

- laminating the film (12) onto the sheet-metal strip (14), the film (12) being stretched before or during lamination in such a way that the spacing between certain graphic elements (20) corresponds to a preset desired spacing ± tolerance, and

- separating the blanks from the sheet-metal strip (14) provided with the printed film (12),

**characterised in that**
the actual spacing after lamination is detected in a second scanning device (31), the deviation from the desired spacing is determined therefrom and is used to control the stretching, and a third scanning device (28) is provided upstream of a separating device (30), the information of which is used to control the advancing device assigned to the separating device (30), whereby the tolerances which have arisen during lamination are compensated for during separation, so that the tolerances of the blank length are observed.

2. Method according to Claim 1,
**characterised in that** the sheet-metal strip (14) and the film (12) are supplied continuously, the film (12) being supplied more slowly than the sheet-metal strip (14).

**3.** Method according to Claim 1 or 2, **characterised in that**, after separation, the corners of the blank are rounded off by punching and a peripheral border is embossed.

**4.** Apparatus (10) for producing blanks (32) for motor vehicle number plates, having:

- a supply device for printed film (12) provided, at a dimension smaller than desired, with repeating graphic elements (20);

- a first scanning device (24) arranged in the region of the supply device and intended for detecting the spacing between the repeating graphic elements (20) before detachment of the backing material;

- a decelerating device (26) assigned to the supply device for the film (12);

- a supply device for sheet-metal strip (14);

- a laminating station (16);

- a separating device (30); and

- a control system for the separating device;

**characterised in that**
a second scanning device (31) arranged downstream of the laminating station (16) and a third scanning device (28) upstream of the separating device (30) are provided, for detecting the spacing between the repeating graphic elements (20) on the laminated film.

**5.** Apparatus according to Claim 4, **characterised in that** the decelerating device has braking rollers (26).

**6.** Apparatus according to Claim 4 or 5, **characterised in that** a punching/embossing device is additionally provided.

**Revendications**

**1.** Procédé utilisé pour la production de platines pour des plaques d'immatriculation de véhicules automobiles, comprenant les étapes suivantes consistant :

- à fournir un feuillard de tôle (14),
- à fournir une feuille imprimée (12) qui, à une dimension inférieure à la cote prescrite, est dotée d'éléments graphiques (20) se répétant,
- à enregistrer, avant le contrecollage, l'espacement des éléments graphiques (20) se répétant,
- à contrecoller ou à laminer la feuille (12) sur le feuillard de tôle (14), où la feuille (12) est allongée avant ou au cours du contrecollage de manière telle, que l'espacement entre des éléments graphiques déterminés (20) correspond à un espacement théorique prédéterminé, avec une tolérance ±, et
- à séparer les platines du feuillard de tôle (14) doté de la feuille imprimée (12),

**caractérisé en ce que**, après le contrecollage, l'espacement réel est enregistré dans un deuxième dispositif de détection (31), l'écart en résultant par rapport à l'espacement théorique est calculé et utilisé pour la commande de l'allongement, et il est prévu, en amont d'un dispositif de séparation (30), un troisième dispositif de détection (28) dont l'information est utilisée pour la commande du dispositif d'avancée associé au dispositif de séparation (30), dispositif d'avancée avec lequel les tolérances apparaissant lors du contrecollage sont compensées lors de la séparation, de sorte que les tolérances concernant la longueur des platines sont respectées.

**2.** Procédé selon la revendication 1, **caractérisé en ce que** le feuillard de tôle (14) et la feuille (12) sont fournis de façon continue, où la feuille (12) est fournie plus lentement que le feuillard de tôle (14).

**3.** Procédé selon la revendication 1 ou 2, **caractérisé en ce que**, après la séparation, les coins de la platine sont arrondis par découpage à l'outil, et un bord circulaire est nervuré.

**4.** Dispositif (10) utilisé pour la production de platines (32) pour des plaques d'immatriculation de véhicules automobiles, comprenant :

- un dispositif d'alimentation d'une feuille imprimée (12) qui, à une dimension inférieure à la cote prescrite, est dotée d'éléments graphiques (20) se répétant ;
- un premier dispositif de détection (24) disposé dans la zone du dispositif d'alimentation, servant à enregistrer, avant de retirer le matériau support, l'espacement existant entre les éléments graphiques (20) se répétant ;
- un dispositif de décélération (26) associé au dispositif d'alimentation de la feuille (12) ;
- un dispositif d'alimentation du feuillard de tôle (14) ;
- un poste de contrecollage (16) ;
- un dispositif de séparation (30) ; et
- une commande du dispositif de séparation ;

**caractérisé en ce qu'**il est prévu un deuxième dispositif de détection (31) disposé en aval du poste de contrecollage (16) et un troisième dispositif de détection (28) disposé en amont du dispositif de séparation (30), servant à enregistrer l'espacement existant entre les éléments graphiques (20) se répétant sur la feuille contrecollée.

5. Dispositif selon la revendication 4, **caractérisé en ce que** le dispositif de décélération présente des rouleaux de freinage (26).

6. Dispositif selon la revendication 4 ou 5, **caractérisé en ce qu'**il est prévu, en plus, un dispositif de découpage / nervurage.

## Fig. 1

Folie mit Abdeckpapier

zum Papieraufwickeln

$L \pm x$

## Fig. 2

$L_1$

$L \pm x$

$L \pm x$

$A \pm z$

$L_2 \pm y$